# EUROPEAN PATENT SPECIFICATION

(11) **EP 1 826 133 B1**
(45) Date of publication and mention of the grant of the patent: **16.02.2011**
(21) Application number: 05811619.5
(22) Date of filing: 05.12.2005
(51) Int. Cl.: B65D 47/08

(54) **HINGED CAP HAVING BIODEGRADABILITY**
BIOLOGISCH ABBAUBARE ANGELENKTE KAPPE
BOUCHON ARTICULE BIODEGRADABLE

(30) Priority: 16.12.2004 JP 2004363750
(43) Date of publication of application: 29.08.2007
(73) Proprietor: UNITIKA LTD., Amagasaki-shi Hyogo 660-0824 (JP); Mikasa Industry Co., Ltd., Kitakatsuragi-gun, Nara 635-0817 (JP)
(72) Inventor: YAMAMOTO, Akira c/o Unitika Ltd; 4-1-3, Osaka 541-8566 (JP); FUJITA, Masami c/o Unikita Ltd; Uji Plant, 31-3, Kyoto 611-0021 (JP); MURAKAMI, Kunio c/o Mikasa Industry Co; Ltd; 53, Nara 635-0817 (JP); SAKAMOTO, Manabu c/o Mikasa Industry Co; Ltd; 53, Nara 635-0817 (JP)
(74) Representative: Pautex Schneider, Nicole Véronique
(86) International application number: PCT/JP2005/022273
(87) International publication number: WO 2006/064683

(56) References cited:
- EP-A- 0 727 361
- WO-A-03/022927
- WO-A1-03/022927
- JP-A- 08 301 329
- JP-A- 2003 192 929
- JP-A- 2003 192 929
- JP-A- 2003 301 096
- JP-A- 2003 301 096

## Description

### TECHNICAL FIELD

The present invention relates to a biodegradable hinge cap of a synthetic resin.

### BACKGROUND ART

Known as a hinge cap for use with a bottle or a tubular container is a cap which includes a cap body and an upper cap portion connected to each other by a hinge having a thinner portion (for example, Japanese Unexamined Utility Publication No. 49(1974)-26863). Another known hinge cap is a snap hinge cap which includes a cap body and an upper cap portion connected to each other by a hinge having a thinner portion and a pair of resilient connection plates provided on opposite sides of the hinge and thereby has a snap function (for example, JP-A-8-301329).

These hinge caps can be conveniently opened and closed by a single hand with no possibility of missing the upper cap portion, because the upper cap portion is connected to the cap body. Further, the snap hinge cap can be opened and closed by a snap action (biasing force) of the resilient connection plates without the need for applying a force.

Conventionally, these hinge caps are each composed of a synthetic olefin resin such as polyethylene or polypropylene. However, such a polyolefin polymer has almost no biodegradability in the natural environment. If the polyolefin hinge caps are discarded and buried in ground, the hinge caps permanently remain in the ground. This presents environmental problems.

To cope with this, a cap composed of a biodegradable polylactic acid is disclosed, for example, in JP-A-6-105887. The polylactic acid is expected to be used for package material applications and the like, because L-lactic acid as a material for the polylactic acid is mass-produced at lower costs and the polylactic acid has excellent biodegradability. Where the hinge cap is composed of the polylactic acid, however, the strength of the hinge is reduced to result in breakage of the hinge during repeated opening and closing of the upper cap portion.

EP-A-0 727 361 discloses a typical hinge cap, but does not refer to the material of the hinge cap.

WO-A-03/022927 discloses a biodegradable resin composition which can be used for a container cap and the like, said resin composition containing at least 50 parts by weight of polylactic acid. Polybutylene succinate is exemplified as a biodegradable resin component other than polylactic acid. Example 3 refers to a mass ratio (polylactic acid)/(polybutylene succinate) of 95 / 5. Said resin composition must contain lamellar silicate in addition to polylactic acid and polybutylene succinate.

### DISCLOSURE OF THE INVENTION

### PROBLEMS TO BE SOLVED BY THE INVENTION

It is an object of the present invention to provide a biodegradable hinge cap which maintains a sufficient hinge strength and is less liable to suffer from the breakage of a hinge thereof even if an upper cap portion thereof is repeatedly opened and closed, like the prior-art hinge cap of polyethylene or polypropylene.

### MEANS FOR SOLVING THE PROBLEMS

As a result of intensive studies for solving the aforementioned problems, the inventors of the present invention found that a hinge cap formed of a resin composition prepared by mixing polylactic acid with an aliphatic polyester resin other than the polylactic acid in a specific mass ratio maintains a sufficient hinge strength even if an upper cap portion thereof is repeatedly opened and closed and even if the hinge cap has a snap function, and the snap function thereof is excellent. Thus, the present invention has been attained.

According to the present invention, a biodegradable hinge cap is provided which comprises: a cap body having a top wall, a spout provided in the top wall and a side wall extending downward from a peripheral edge of the top wall; and an upper cap portion connected to the cap body via a hinge and capable of capping and uncapping the spout; the hinge cap being composed of a resin composition comprising polylactic acid and one of polybutylene succinate and polybutylene succinate adipate; wherein the polylactic acid and one of polybutylene succinate and polybutylene succinate adipate are present in the resin composition in a mass ratio of (polylactic acid) : (one of polybutylene succinate and polybutylene succinate adipate) = 90:10 to 5:95.

The inventive hinge cap is preferably composed of a resin composition comprising the polylactic acid and one of polybutylene succinate and polybutylene succinate adipate in a mass ration of (polylactic acid) : (one of polybutylene succinate and polybutylene succinate adipate) = 60:40 to 10:90, so that the hinge cap can maintain a sufficient hinge strength even after the upper cap portion is opened and closed. It is particularly preferred that the inventive hinge cap is composed of a resin composition comprising the polylactic acid and in a mass ratio of (polylactic acid): (one of polybutylene succinate and polybutylene succinate adipate ) = 40:60 to 20:80.

According to the present invention, the resin composition to be used for the hinge cap preferably has a flexural modulus of 700 to 3000 MPa to impart the hinge cap with a snap function, and particularly preferably has a flexural modulus of 1100 to 1800 MPa.

The resin composition to be used for the inventive hinge cap may further comprise 0.01 to 5 parts by mass of a fatty acid, a fatty amide or a mixture of the fatty acid and the fatty amide based on a total of 100 parts by mass of the polylactic acid and one of polybutylene succinate and polybutylene succinate adipate.

The resin composition to be used for the inventive hinge cap may further comprise 1 to 10 parts by mass of an anti-blocking agent based on a total of 100 parts by mass of the polylactic acid and one of polybutylene succinate and polybutylene succinate adipate.

The resin composition to be used for the inventive hinge cap preferably further comprises 0.1 to 10 parts by mass of a hydrolysis suppressing agent based on a total of 100 parts by mass of the polylactic acid and one of polybutylene succinate and polybutylene succinate adipate.

In the inventive hinge cap, the hinge may have a snap function for opening and closing the upper cap portion with respect to the cap body. In the inventive hinge cap, the hinge may include a thin hinge portion which connects the side wall of the cap body to a side wall of the upper cap portion, and a pair of resilient connection plates provided on opposite sides of the thin hinge portion to connect the side wall of the cap body to the side wall of the upper cap portion, wherein the resilient connection plates have a snap function for opening and closing the upper cap portion with respect to the cap body.

In the inventive hinge cap, the hinge preferably has a tensile break stress retention ratio of not less than 20%, particularly preferably a tensile break stress retention ratio of not less than 40%, after the upper cap portion is subjected to an opening/closing operation 1,000 times.

### EFFECTS OF THE INVENTION

The inventive biodegradable hinge cap is composed of the resin composition comprising the polylactic acid and an aliphatic polyester resin other than the polylactic acid which is one of polybutylene succinate and polybutylene succinate adipate, and the mass ratio between the polylactic acid and one of polybutylene succinate and polybutylene succinate adipate in the resin composition is set at a value within the specific range. Thus, even if the upper cap portion is repeatedly opened and closed, the hinge maintains a given hinge strength. Further, the hinge cap has excellent biodegradability in the natural environment and under composting conditions and, therefore, is an environmentally friendly package material.

### BRIEF DESCRIPTION OF THE DRAWINGS

Fig. 1 is a plan view of a hinge cap according to an embodiment of the present invention.
Fig. 2 is a sectional view of the hinge cap of Fig. 1.
Fig. 3 is a plan view of a hinge cap according to another embodiment of the present invention.
Fig. 4 is a sectional view of the hinge cap of Fig. 3.

### BEST MODE FOR CARRYING OUT THE INVENTION

The present invention will hereinafter be described in detail.

### Polylactic Acid

Examples of the polylactic acid to be contained in the resin composition for the inventive hinge cap include poly(L-lactic acid) having a structural unit of L-lactic acid, poly(D-lactic acid) having a structural unit of D-lactic acid, poly(DL-lactic acid) having structural units of L-lactic acid and D-lactic acid, and a mixture of any of these polylactic acids. Particularly, a molar ratio between L-lactic acid and D-lactic acid in the polylactic acid is preferably (L-lactic acid) : (D-lactic acid) = 100:0 to 90:10 or (L-lactic acid) : (D-lactic acid) = 0:100 to 10:90, more preferably (L-lactic acid):(D-lactic acid) = 100:0 to 94:6 or (L-lactic acid) : (D-lactic acid) = 0:100 to 6:94. If the ratio between L-lactic acid and D-lactic acid falls outside the aforesaid range, it is difficult to impart the hinge cap with heat resistance, thereby limiting the application of the hinge cap.

In the present invention, polylactic acids containing L-lactic acid and D-lactic acid in different copolymerization ratios may be blended. In this case, the average of the copolymerization ratios between L-lactic acid and D-lactic acid of the polylactic acids preferably falls within the aforesaid range.

A known method such as a condensation polymerization method or a ring-opening polymerization method may be employed for polymerization for preparation of the polylactic acid. In the condensation polymerization method, for example, L-lactic acid, D-lactic acid or a mixture of L-lactic acid and D-lactic acid is directly subjected to dehydration/condensation polymerization to provide a polylactic acid having a desired composition. In the ring-opening polymerization method (lactide method), lactide which is a cyclic dimer of lactic acid is employed together with a proper catalyst and optionally a polymerization modifier to provide a polylactic acid having a desired composition and a desired crystallinity. Examples of the lactide include L-lactide which is a dimer of L-lactic acid, D-lactide which is a dimer of D-lactic acid and DL-lactide which contains L-lactic acid and D-lactic acid. These lactides are mixed as required and subjected to the polymerization to provide a polylactic acid having a desired composition and a desired crystallinity.

The polylactic acid to be used in the present invention preferably has a weight-average molecular weight of 50,000 to 400, 000, more preferably 100,000 to 250,000. If the weight-average molecular weight of the polylactic acid is lower than 50,000, it is impossible to impart the hinge cap with practical properties such as mechanical properties and heat resistance. If the weight-average molecular weight is higher than 400,000, the polylactic acid has an excessively high melt viscosity and hence an inferior moldability.

Aliphatic Polyester Resin other than Polylactic Acid

One of polybutylene succinate and polybutylene succinate adipate is employed as the aliphatic polyester resin other than the polylactic acid to be contained in the resin composition for the inventive hinge cap in order to allow the hinge cap to maintain a given hinge strength even if the upper cap portion is repeatedly opened and closed. Polybutylene succinate is a dehydration condensation product of 1,4-butanediol and succinic acid, and polybutylene succinate adipate is a dehydration condensation product of 1,4-butanediol succinic acid and adipic acid. These two polyalkylene alkanoates preferably each have a molecular weight increased by employing a chain extending agent such as polylactic acid, a polyisocyanate or an acid anhydride in order to impart a molded product with a sufficient strength.

### Resin Composition

In the present invention, the mass ratio between the polylactic acid and one of polybutylene succinate and polybutylene succinate adipate in the resin composition for the hinge cap should be (polylactic acid) : (one of polybutylene succinate and polybutylene succinate adipate) = 90:10 to 5:95. If the ratio of the one of polybutylene succinate and polybutylene succinate adipate is less than 10 mass%, the hinge is liable to be broken. If the ratio of the one of polybutylene succinate and polybutylene succinate adipate is greater than 95 mass%, the snap function of the hinge is deteriorated. A resin composition containing the polylactic acid and one of polybutylene succinate and polybutylene succinate adipate in a mass ratio of 60:40 to 10:90 is preferably used, and a resin composition containing the polylactic acid and one of polybutylene succinate and polybutylene succinate adipate in a mass ratio of 40:60 to 20:80 is more preferably used.

The resin composition to be used in the present invention preferably has a flexural modulus of 700 to 3000 MPa as determined in conformity with JIS K1717. If the flexural modulus is less than 700 MPa, the snap function tends to be deteriorated. If the flexural modulus is more than 3000 MPa, the hinge is liable to be broken when the upper cap portion is repeatedly opened and closed. Therefore, it is particularly preferred that the flexural modulus is in a range of 1100 to 1800 MPa

The resin composition to be used in the present invention preferably further contains 0.01 to 5 parts by mass of a lubricant based on a total of 100 parts by mass of the polylactic acid and one of polybutylene succinate and polybutylene succinate adipate for improvement of the releasability of the resin in a process for molding the hinge cap. In detail, where the hinge cap is injection-molded, the releasability of a molded product from a mold should be taken into consideration. By adding a specific amount of the lubricant to the resin composition for the inventive cap as described above, the releasability and the moldability are improved in the molding process.

In the molding process, the addition of the lubricant improves the screw-biting kneadability of the resin composition. If the lubricant is contained in an amount within the aforesaid specific range, the resin smoothly flows along a screw of a molding machine when being charged into the molding machine. Conversely, if the lubricant is charged in an amount greater than the aforesaid specific range, the biting kneadability of the resin composition is reduced, resulting in molding failures.

The lubricant may be a so-called internal lubricant for internal lubrication or an external lubricant for external lubrication, and these lubricants may be used in combination. Any of lubricants typically used for resin molding may be used in the present invention. Where the resin composition according to the invention is used for food containers, however, a lubricant admitted as a food additive is desirably used.

More specific examples of the lubricant include fatty acids such as stearic acid, fatty amides such as erucamide, methylene-bis-stearamide, ethylene-bis-stearamide, ethylene-bis-palmitamide and ethylene-bis-oleamide, and mixtures of any of the fatty acids and any of the fatty amides as proposed in JP-A-8-27363.

The releasability can be improved not only by adding the lubricant as described above but also by forming pits in a surface of the molded cap to increase the surface roughness of the cap. In order to improve the moldability by controlling the biting kneadability of the resin, the resin composition for the inventive hinge cap preferably contains 1 to 10 parts by mass of an anti-blocking agent based on a total of 100 parts by mass of the polylactic acid and one of polybutylene succinate and polybutylene succinate adipate. Any of conventionally known anti-blocking agents may be used. For example, talc particles are preferably used as the anti-blocking agent.

The addition of the lubricant and the anti-blocking agent may be achieved by an internally adding method in which a master batch containing the lubricant and the anti-blocking agent in relatively high concentrations is first prepared and then blended or by an externally adding method in which the lubricant and the anti-blocking agent are added directly to pellets.

The resin composition to be used for the inventive hinge cap preferably further contains 0.1 to 10 parts by mass of a hydrolysis suppressing agent based on a total of 100 parts by mass of the polylactic acid and one of polybutylene succinate and polybutylene succinate adipate for suppressing the hydrolysis. The type of the hydrolysis suppressing agent is not particularly limited, as long as it suppresses the hydrolysis of the resin composition.

Examples of the hydrolysis suppressing agent include carbodiimide compounds, isocyanate compounds and oxazoline compounds as proposed in JP-B-3514736 and JP-A-2003-165917.

### Hinge Cap

The hinge cap is produced by mixing the polylactic acid directly with one of polybutylene succinate and polybutylene succinate adipate and, optionally, the lubricant, the anti-blocking agent, the hydrolysis suppressing agent and other additives, and injection-molding the resulting resin composition. Alternatively, the production of the hinge cap may be achieved by extruding a mixture of dry-blended ingredients into strands by means of a twin screw extruder, pelletizing the strands and charging the resulting pellets into an injection molding machine. The latter method is preferably selected for more homogeneously mixing the ingredients.

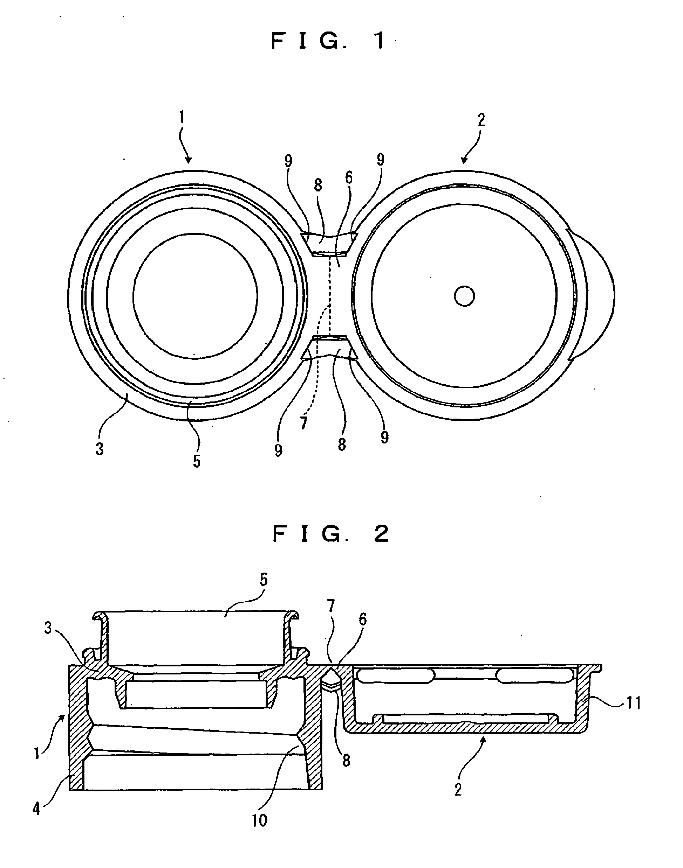

A hinge cap according to an embodiment of the present invention will hereinafter be described in detail with reference to the attached drawings. The hinge cap according to the embodiment of the present invention shown in Figs. 1 and 2 includes a cap body 1 to be attached to a mouth of a container such as a bottle or a tubular container, and an upper cap portion 2 which caps and uncaps a spout 5 provided on the cap body 1. The cap body 1 has a top wall 3, and the spout 5 is provided in the top wall 3. A reference numeral 4 denotes a cylindrical side wall extending downward from a peripheral edge of the top wall 3, and the cylindrical side wall 4 has an inner thread 10 provided on an inner peripheral surface thereof for attaching the cap body 1 onto the container. The upper cap portion 2 has a cylindrical side wall 11 having the same diameter as the side wall 4 of the cap body 1. The side walls 4 and 11 of the cap body 1 and the upper cap portion 2 are integrally connected to each other by a thin hinge portion 6 and a pair of resilient connection plates 8 provided on opposite sides of the thin hinge portion 6.

The thin hinge portion 6 connects the cap body 1 and the upper cap portion 2 diametrically to each other between the cylindrical side wall 4 of the cap body 1 and the side wall 11 of the upper cap portion 2. The resilient connection plates 8 are provided in pair on the opposite sides of the thin hinge portion 6.

With the upper cap portion 2 being opened, the thin hinge portion 6 is formed so as to make the upper cap portion 2 substantially horizontal. The thin hinge portion 6 has a thinner portion 7 provided on an upper surface thereof as extending through a middle position between the cap body 1 and the upper cap portion 2. The thinner portion 7 is bent when the upper cap portion 2 is opened and closed.

The pair of resilient connection plates 8 are disposed on the opposite sides of the thin hinge portion 6 in neighboring relation, and connected to the side wall 4 of the cap body 1 and the side wall 11 of the upper cap portion 2 via flexural portions 9. The resilient connection plates 8 are resilient thin plates each having a generally uniform thickness, and perform a snap action when the upper cap portion is opened and closed.

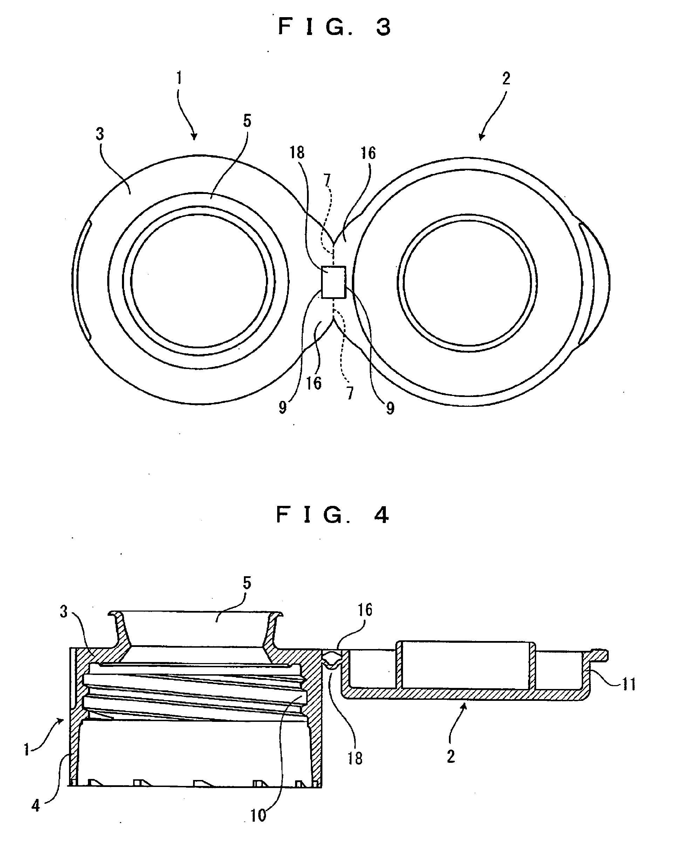

The structure of the hinge is not limited to the aforementioned one. For example, as shown in Figs. 3 and 4, the hinge may have a structure such that a resilient connection plate 18 is provided between a pair of thin hinge portions 16, 16 provided side by side. In Figs. 1 and 2, the thin hinge portion 6 and the resilient connection plates 8 may be integral. Further, any other known hinge structure may be employed. A hinge cap including only the thin hinge portion as the hinge and having no snap function is also embraced in the present invention.

The attachment of the hinge cap to the container is achieved, for example, by threading engagement between an outer thread provided on an outer peripheral surface of a cylindrical mouth portion of the container not shown and the inner thread 10 provided on the inner peripheral surface of the side wall 4 of the cap body 1 shown in Fig. 1. The attachment of the hinge cap to the container is not limited to the aforementioned attaching method. The cap body may have engagement projections provided on the inner surface of the side wall thereof to be engaged with a ring projection provided on the outer peripheral surface of the cylindrical mouth portion of the container, and the attachment of the hinge cap to the container may be achieved by a so-called squeeze capping method by squeezing the cylindrical mouth portion into the cap body.

The inventive hinge cap preferably has a hinge strength retention ratio of not less than 20% which is determined by measurement of a hinge strength (tensile break stress) to be described later after 1000-time opening and closing of the upper cap portion. A hinge strength retention ratio of less than 20% is not preferred because the thin hinge portion 6 and the flexural portions 9 are liable to be broken when the upper cap portion 2 of Figs. 1 and 2, for example, is repeatedly opened and closed. More preferably, the hinge strength retention ratio is not less than 40%.

### EXAMPLES

The present invention will be described more specifically by way of examples and comparative examples. However, the invention is not limited to these examples. The flexural modulus of a resign composition containing the polylactic acid and one of polybutylene succinate and polybutylene succinate adipate in each of the following examples and comparative examples was determined in conformity with JIS K7171 with the use of a test strip prepared by injection molding.

### Cap

Hinge caps shown in Figs. 1 and 2 or Figs. 3 and 4 were molded by an injection molding machine (FE120 available from Nissei Plastic Industrial Co., Ltd.) under the following conditions: a cylinder temperature of 170°C; an injection pressure of 105 MPa; and a molding cycle of 17 seconds.

### Measurement of Hinge Strength

An upper cap portion 2 of each of the hinge caps produced by the injection molding as having a structure shown in Figs. 1 and 2 or Figs. 3 and 4 was repeatedly subjected to an opening/closing operation 1000 times by opening the upper cap portion to an angle of 180 degrees. Thereafter, the hinge strength was measured by fixing the cap body to a base of a tensile tester with the upper cap portion 2 being opened to an angle of 180 degrees with respect to the cap body 1, and pulling the upper cap portion vertically upward at a pulling rate of 300 mm/min. The hinge strength retention ratio was determined by comparing the hinge strength thus measured with the hinge strength of a hinge cap not subjected to the upper cap portion opening/closing operation.

### Evaluation of Snap Function

The snap action (biasing force) was observed after the 1000-time opening and closing of the upper cap portion 2. A hinge cap having a proper snap function was rated good, and a hinge cap with its snap function lost was rated unacceptable

### Example 1

A resin composition was prepared by dry-blending a poly(DL-lactic acid) resin (hereinafter referred to simply as "polylactic acid") containing D-lactic acid and L-lactic acid in a molar ratio of (L-lactic acid) : (D-lactic acid) = 99:1 and polybutylene succinate as an aliphatic polyester resin other than the polylactic acid in a mass ratio of (polylactic acid) : (polybutylene succinate) = 70:30, and then blending 0.5 parts by mass of erucamide (lubricant) and 1.5 parts by mass of bis(dipropylphenyl)carbodiimide (hydrolysis suppressing agent) with 100 parts by mass of the resulting mixture. A hinge cap as shown in Figs. 1 and 2 was injection-molded from this resin composition. The hinge cap thus obtained was stored at an ordinary temperature for three days after the molding thereof, followed by the measurement of the hinge strength and the evaluation of the snap function. The results are shown in Table 1.

### Example 2

A hinge cap as shown in Figs. 3 and 4 was injection-molded from a resin composition prepared by dry-blending the polylactic acid of the same type as used in Example 1 and polybutylene succinate in a mass ratio of 50:50, and blending 0.5 parts by mass of erucamide and 1.5 parts by mass of bis (dipropylphenyl) carbodiimide with 100 parts by mass of the resulting mixture. The hinge cap thus obtained was stored at an ordinary temperature for three days after the molding thereof, followed by the measurement of the hinge strength and the evaluation of the snap function. The results are shown in Table 1.

### Example 3

A hinge cap as shown in Figs. 1 and 2 was injection-molded in substantially the same manner as in Example 1, except that the resin composition was prepared by dry-blending the polylactic acid of the same type as used in Example 1 and polybutylene succinate in a mass ratio of (polylactic acid) : (polybutylene succinate) = 30:70, and blending 0.5 parts by mass of erucamide and 1.5 parts by mass of bis (dipropylphenyl)carbodiimide with 100 parts by mass of the resulting mixture. The hinge cap thus obtained was stored at an ordinary temperature for three days after the molding thereof, and then immersed in hot water at 45°C for two months, followed by the measurement of the hinge strength and the evaluation of the snap function. The results are shown in Table 1.

### Example 4

A hinge cap as shown in Figs. 1 and 2 was injection-molded in substantially the same manner as in Example 1, except that the resin composition was prepared by dry-blending the polylactic acid of the same type as used in Example 1 and polybutylene succinate adipate in a mass ratio of 50:50, and blending 0.5 parts by mass of erucamide (lubricant), 3 parts by mass of talc (anti-blocking agent) and 1.5 parts by mass of bis (dipropylphenyl) carbodiimide with 100 parts by mass of the resulting mixture. The hinge cap thus obtained was stored at an ordinary temperature for three days after the molding thereof, followed by the measurement of the hinge strength and the evaluation of the snap function. The results are shown in Table 1.

### Comparative Example 1

A hinge cap as shown in Figs. 1 and 2 was injection-molded from a resin composition prepared by blending 0.5 parts by mass of erucamide (lubricant) and 1.5 parts by mass of bis(dipropylphenyl)carbodiimide (hydrolysis suppressing agent) with 100 parts by mass of the polylactic acid of the same type as used in Example 1. That is, one of polybutylene succinate and polybutylene succinate adipate was not used. As in Example 1, the hinge cap thus obtained was stored at an ordinary temperature for three days, and then an upper cap portion thereof was opened and closed for determination of the hinge strength thereof. However, a hinge of the hinge cap was broken when the opening/closing operation was repeated 30 times and, therefore, the measurement of the hinge strength and the evaluation of the snap function were given up. The results are shown in Table 1.

### Comparative Example 2

A hinge cap as shown in Figs. 1 and 2 was injection-molded from a resin composition prepared by dry-blending the polylactic acid of the same type as used in Example 1 and polybutylene succinate in a mass ratio of (polylactic acid):(polybutylene succinate) = 95:5, and blending 0. 5 parts by mass of erucamide and 1. 5 parts by mass of bis(dipropylphenyl)carbodiimide with 100 parts by mass of the resulting mixture. That is, the blend ratio between the polylactic acid resin and polybutylene succinate fell outside the range specified by the present invention. The hinge cap thus obtained was stored at an ordinary temperature for three days after the molding thereof, and then an upper cap portion thereof was opened and closed for determination of the hinge strength thereof. However, a hinge of the hinge cap was broken when the opening/closing operation was repeated 80 times and, therefore, the measurement of the hinge strength and the evaluation of the snap function were given up. The results are shown in Table 1.

**Table 1**

| | Example | | | | Comparative Example | |
|---|---|---|---|---|---|---|
| | 1 | 2 | 3 | 4 | 1 | 2 |
| Composition | | | | | | |
| Polylactic acid (mass%) | 70 | 50 | 30 | 50 | 100 | 96 |
| Polybutylene succinate (mass%) | 30 | 60 | 70 | - | 0 | 5 |
| Polybutylene succinate adipate (mass%) | - | - | - | 50 | - | - |
| Erucamide (parts by mass) | 0.5 | 0.5 | 0.5 | 0.5 | 0.5 | 0.5 |
| Talc (parts by mass) | - | - | - | 3 | - | - |
| Bis(dipropylphenyl)carbodiimide(parts by mass) | 1.5 | 1.5 | 1.5 | 1.5 | 1.5 | 1.5 |

| Properties | | | | | | |
|---|---|---|---|---|---|---|
| Flexural modulus (M-Pa) | 2600 | 2000 | 1400 | 1600 | 4300 | 3900 |
| Hinge strength retention ratio (%) | 32.4 | 46.3 | 50.1 | 49.7 | - | - |
| Evaluation of snap function | Good | Good | Good | Good | Unacceptable | Unacceptable |

As can be understood from the results of Examples 1 to 4 in Table 1, the hinge caps produced by using the resin compositions based on the present invention each maintained a practically satisfactory hinge strength even after 1000-time opening and closing of the upper cap portion thereof, and had a proper snap function. Particularly, the hinge cap of Example 3, in which the blend ratio of the polylactic acid was relatively low and bis(dipropylphenyl)carbodiimide was blended as the hydrolysis suppressing agent, had a satisfactory hinge strength retention ratio even through it was stored at the ordinary temperature for three days after the molding thereof and then immersed in the hot water at 45°C for two months.

In contrast, the hinge caps of Comparative Examples 1 and 2 each employing a resin composition falling outside the scope of the present invention suffered from breakage of a hinge thereof at an early stage of the opening/closing operation, and had an unsatisfactory snap function, thereby failing to satisfy functional requirements as a hinge cap.

## Claims

1. A biodegradable hinge cap comprising:
a cap body having a top wall, a spout provided in the top wall and a side wall extending downward from a peripheral edge of the top wall; and
an upper cap portion connected to the cap body via a hinge and capable of capping and uncapping the spout;
the hinge cap being composed of a resin composition comprising polylactic acid and one of polybutylene succinate and polybutylene succinate adipate;
wherein the polylactic acid and one of polybutylene succinate and polybutylene succinate adipate are present in the resin composition in a mass ratio of (polylactic acid):( one of polybutylene succinate and polybutylene succinate adipate) = 90:10 to 5:95.

2. A biodegradable hinge cap as set forth in claim 1,
wherein the mass ratio between the polylactic acid and one of polybutylene succinate and polybutylene succinate adipate in the resin composition is (polylactic acid):(one of polybutylene succinate and polybutylene succinate adipate) = 60:40 to 10:90.

3. A biodegradable hinge cap as set forth in claim 1,
wherein the mass ratio between the polylactic acid and one of polybutylene succinate and polybutylene succinate adipate in the resin composition is (polylactic acid):(one of polybutylene succinate and polybutylene succinate adipate) = 40 : 60 to 20 : 80.

4. A biodegradable hinge cap as set forth in claim 1,
wherein the resin composition has a flexural modulus of 700 to 3000 MPa.

5. A biodegradable hinge cap as set forth in claim 1,
wherein the resin composition has a flexural modulus of 1100 to 1800 MPa.

6. A biodegradable hinge cap as set forth in claim 1,
wherein the resin composition further comprises 0.01 to 5 parts by mass of one of a fatty acid, a fatty amide and a mixture of the fatty acid and the fatty amide based on a total of 100 parts by mass of the polylactic acid and one of polybutylene succinate and polybutylene succinate adipate.

7. A biodegradable hinge cap as set forth in claim 1,
wherein the resin composition further comprises 1 to 10 parts by mass of an anti-blocking agent based on a total of 100 parts by mass of the polylactic acid and one of polybutylene succinate and polybutylene succinate adipate.

8. A biodegradable hinge cap as set forth in claim 1,
wherein the resin composition further comprises 0.1 to 10 parts by mass of a hydrolysis suppressing agent based on a total of 100 parts by mass of the polylactic acid and one of polybutylene succinate and polybutylene succinate adipate.

9. A biodegradable hinge cap as set forth in claim 1,
wherein the hinge has a snap function for opening and closing the upper cap portion with respect to the cap body.

10. A biodegradable hinge cap as set forth in claim 9,
wherein the hinge includes a thin hinge portion which connects the side wall of the cap body to a side wall of the upper cap portion, and a pair of resilient connection plates provided on opposite sides of the thin hinge portion to connect the side wall of the cap body to the side wall of the upper cap portion.

11. A biodegradable hinge cap as set forth in claim 1,
wherein the hinge has a tensile break stress retention ratio of not less than 20 % after the upper cap portion is subjected to an opening/closing operation 1,000 times.

12. A biodegradable hinge cap as set forth in claim 1,
wherein the hinge has a tensile break stress retention ratio of not less than 40 % after the upper cap portion is subjected to an opening/closing operation 1,000 times.

## Patentansprüche

1. Biologisch abbaubare angelenkte Kappe mit:
einem Kappen-Hauptteil, der eine Decke, eine in der Decke vorgesehene Ausgießöffnung und eine Seitenwand hat, die von einem peripheren Rand der Decke nach unten verläuft; und
einem oberen Kappenteil, der über ein Gelenk mit dem Kappen-Hauptteil verbunden ist und die Ausgießöffnung abdecken und freilegen kann,
wobei
die angelenkte Kappe aus einer Harzzusammensetzung besteht, die Polymilchsäure und entweder Polybutylensuccinat oder Polybutylensuccinatadipat enthält, und
die Polymilchsäure und entweder das Polybutylensuccinat oder das Polybutylensuccinatadipat in der Harzzusammensetzung in einem Massenverhältnis von (Polymilchsäure) : (Polybutylensuccinat oder Polybutylensuccinatadipat) = 90 : 10 bis 5 : 95 vorliegen.

2. Biologisch abbaubare angelenkte Kappe nach Anspruch 1, **dadurch gekennzeichnet, dass** das Massenverhältnis zwischen der Polymilchsäure und entweder dem Polybutylensuccinat oder dem Polybutylensuccinatadipat in der Harzzusammensetzung (Polymilchsäure) : (Polybutylensuccinat oder Polybutylensuccinatadipat) = 60 : 40 bis 10 : 90 beträgt.

3. Biologisch abbaubare angelenkte Kappe nach Anspruch 1, **dadurch gekennzeichnet, dass** das Massenverhältnis zwischen der Polymilchsäure und entweder dem Polybutylensuccinat oder dem Polybutylensuccinatadipat in der Harzzusammensetzung (Polymilchsäure) : (Polybutylensuccinat oder Polybutylensuccinatadipat) = 40 : 60 bis 20 : 80 beträgt.

4. Biologisch abbaubare angelenkte Kappe nach Anspruch 1, **dadurch gekennzeichnet, dass** die Harzzusammensetzung ein Biegemodul von 700 bis 3000 MPa hat.

5. Biologisch abbaubare angelenkte Kappe nach Anspruch 1, **dadurch gekennzeichnet, dass** die Harzzusammensetzung ein Biegemodul von 1100 bis 1800 MPa hat.

6. Biologisch abbaubare angelenkte Kappe nach Anspruch 1, **dadurch gekennzeichnet, dass** die Harzzusammensetzung weiterhin 0,01 bis 5 Masseteile Fettsäure, Fettsäureamid oder ein Gemisch aus Fettsäure und Fettsäureamid enthält, bezogen auf insgesamt 100 Masseteile Polymilchsäure und entweder Polybutylensuccinat oder Polybutylensuccinatadipat.

7. Biologisch abbaubare angelenkte Kappe nach Anspruch 1, **dadurch gekennzeichnet, dass** die Harzzusammensetzung weiterhin 1 bis 10 Masseteile Antihaftmittel enthält, bezogen auf insgesamt 100 Masseteile Polymilchsäure und entweder Polybutylensuccinat oder Polybutylensuccinatadipat.

8. Biologisch abbaubare angelenkte Kappe nach Anspruch 1, **dadurch gekennzeichnet, dass** die Harzzusammensetzung weiterhin 0,1 bis 10 Masseteile Hydrolyse-Inhibitor enthält, bezogen auf insgesamt 100 Masseteile Polymilchsäure und entweder Polybutylensuccinat oder Polybutylensuccinatadipat.

9. Biologisch abbaubare angelenkte Kappe nach Anspruch 1, **dadurch gekennzeichnet, dass** das Gelenk eine Schnappfunktion zum Öffnen und Schließen des oberen Kappenteils in Bezug auf das Kappen-Hauptteil hat.

10. Biologisch abbaubare angelenkte Kappe nach Anspruch 9, **dadurch gekennzeichnet, dass** das Gelenk einen dünnen Gelenkteil, der die Seitenwand des Kappen-Hauptteils mit einer Seitenwand des oberen Kappenteils verbindet, und ein Paar elastische Verbindungsplatten hat, die an gegenüberliegenden Seiten des dünnen Gelenkteils vorgesehen sind, um die Seitenwand des Kappen-Hauptteils mit der Seitenwand des oberen Kappenteils zu verbinden.

11. Biologisch abbaubare angelenkte Kappe nach Anspruch 1, **dadurch gekennzeichnet, dass** das Gelenk nach 1000maligem Öffnen und Schließen des oberen Kappenteils ein Zugbruch-Spannungsretentions-Verhältnis von nicht weniger als 20 % hat.

12. Biologisch abbaubare angelenkte Kappe nach Anspruch 1, **dadurch gekennzeichnet, dass** das Gelenk nach 1000maligem Öffnen und Schließen des oberen Kappenteils ein Zugbruch-Spannungsretentions-Verhältnis von nicht weniger als 40 % hat.

## Revendications

1. Bouchon articulé biodégradable comprenant :
un corps de bouchon ayant une paroi supérieure, un bec verseur prévu dans la paroi supérieure et une paroi latérale s'étendant vers le bas à partir d'un bord périphérique de la paroi supérieure ; et
une partie supérieure de bouchon connectée au corps de bouchon par l'intermédiaire d'une charnière et apte à couvrir et découvrir le bec verseur ;
le bouchon articulé étant composé d'une composition de résine comprenant un poly(acide lactique) et l'un d'un poly(succinate de butylène) et d'un poly(succinate-adipate de butylène) ;
dans lequel le poly(acide lactique) et l'un du poly(succinate de butylène) et du poly(succinate-adipate de butylène) sont présents dans la composition de résine dans un rapport en masse de [poly(acide lactique):un du poly(succinate de butylène) et du poly(succinate-adipate de butylène)] = 90:10 à 5:95.

2. Bouchon articulé biodégradable selon la revendication 1, dans lequel le rapport en masse entre le poly(acide lactique) et l'un du poly(succinate de butylène) et du poly(succinate-adipate de butylène) dans la composition de résine est [poly(acide lactique):un du poly(succinate de butylène) et du poly(succinate-adipate de butylène)] = 60:40 à 10:90.

3. Bouchon articulé biodégradable selon la revendication 1, dans lequel le rapport en masse entre le poly(acide lactique) et l'un du poly(succinate de butylène) et du poly(succinate-adipate de butylène) dans la composition de résine est [poly(acide lactique):un du poly(succinate de butylène) et du poly(succinate-adipate de butylène)] = 40:60 à 20:80.

4. Bouchon articulé biodégradable selon la revendication 1, dans lequel la composition de résine a un module de flexion de 700 à 3 000 MPa.

5. Bouchon articulé biodégradable selon la revendication 1, dans lequel la composition de résine a un module de flexion de 1 100 à 1 800 MPa.

6. Bouchon articulé biodégradable selon la revendication 1, dans lequel la composition de résine comprend en outre 0,01 à 5 parties en masse de l'un d'un acide gras, d'un amide gras et d'un mélange de l'acide gras et de l'amide gras sur la base d'un total de 100 parties en masse du poly(acide lactique) et de l'un du poly(succinate de butylène) et du poly(succinate-adipate de butylène).

7. Bouchon articulé biodégradable selon la revendication 1, dans lequel la composition de résine comprend en outre 1 à 10 parties en masse d'un agent anti-adhérent sur la base d'un total de 100 parties en masse du poly(acide lactique) et de l'un du poly(succinate de butylène) et du poly(succinate-adipate de butylène).

8. Bouchon articulé biodégradable selon la revendication 1, dans lequel la composition de résine comprend en outre 0,1 à 10 parties en masse d'un agent anti-hydrolyse sur la base d'un total de 100 parties en masse du poly(acide lactique) et de l'un du poly(succinate de butylène) et du poly(succinate-adipate de butylène).

9. Bouchon articulé biodégradable selon la revendication 1, dans lequel la charnière a une fonction de ressort pour ouvrir et fermer la partie supérieure de bouchon par rapport au corps de bouchon.

10. Bouchon articulé biodégradable selon la revendication 9, dans lequel la charnière inclut une partie mince de charnière qui connecte la paroi latérale du corps de bouchon à une paroi latérale de la partie supérieure de bouchon, et une paire de plaques de connexion résilientes prévues sur des côtés opposés de la partie mince de charnière pour connecter la paroi latérale du corps de bouchon à la paroi latérale de la partie supérieure de bouchon.

11. Bouchon articulé biodégradable selon la revendication 1, dans lequel la charnière a un taux de rétention de force de rupture à la tension de pas moins de 20% après que la partie supérieure de bouchon a été soumise 1 000 fois à une opération d'ouverture/fermeture.

12. Bouchon articulé biodégradable selon la revendication 1, dans lequel la charnière a un taux de rétention de force de rupture à la tension de pas moins de 40% après que la partie supérieure de bouchon a été soumise 1 000 fois à une opération d'ouverture/fermeture.
